# EUROPEAN PATENT SPECIFICATION

(11) **EP 4 213 638 B1**
(45) Date of publication and mention of the grant of the patent: **02.12.2026**
(21) Application number: 21783371.4
(22) Date of filing: 17.09.2021
(51) Int. Cl.: A23G 1/32, A23G 1/40, A23G 1/48, A23P 10/30

(54) **NOVEL COATED BULKING AGENT PARTICLES**
NEUARTIGE BESCHICHTETE FÜLLSTOFFPARTIKEL
NOUVELLES PARTICULES D'AGENT DE CHARGE ENROBÉES

(30) Priority: 17.09.2020 EP 20196780
(43) Date of publication of application: 26.07.2023
(73) Proprietor: Cargill, Incorporated, Wayzata, Minnesota 55391 (US)
(72) Inventor: BENSOUISSI, Abdelfattah, 1800 Vilvoorde (BE); CASPAR, Audrey, Sharnbrook Bedfordshire MK44 1LQ (GB); HEDGES, Nicholas David, Sharnbrook Bedfordshire MK44 1LQ (GB); MITCHELL, John Turner, Sharnbrook Bedfordshire MK44 1LQ (GB); VAES, Nick, 1800 Vilvoorde (BE)
(74) Representative: Cargill IP Department
(86) International application number: PCT/US2021/050812
(87) International publication number: WO 2022/061074

(56) References cited:
- WO-A1-2011/141150
- WO-A1-2012/095121
- WO-A1-2017/093302
- WO-A1-2018/100059
- WO-A1-2018/224539
- WO-A1-2019/152703
- WO-A1-2020/115303
- WO-A1-2020/182687
- US-A- 5 342 636

## Description

### FIELD OF THE INVENTION

The present invention relates to novel coated bulking agent particles for reduction of calories in fat-based food products comprising sugar.

### BACKGROUND OF THE INVENTION

Reduction of calories in fat-based food products comprising sugar is known to have been achieved through replacement of sugar with a substitute of lower calorific value. The substitute may be a bulking agent; however, simple substitution may have the disadvantage of adversely affecting the viscosity, texture and sweetness of the final product (US 5,342,636). Additionally, US 5,342,636 also discloses that only a limited amount of sugar may be substituted by a cellulose or fibrous bulking agent in an oil based product without adversely affecting the viscosity and organoleptic properties of the food product. Therefore, as a sugar substitute to reduce the calories of a product, direct substitution of sugar with a bulking agent provides only a small reduction in calories, if any.

An alternative solution for reducing the calorie content of fat-based food products comprising sugar includes the use of a modified bulking agent as a substitute for the sugar. US 5,342,636 discloses a modified bulking agent and a process for its preparation. The modified bulking agent contains a cellulosic bulking agent and an additive of sugar, protein or a combination thereof. The modified bulking agent has an amount of additive of from about 5% to about 50% by weight of the modified bulking agent final product; more than a total of 50 wt% of the additive results in a modified bulking agent having an excess of additive not bound to the fiber. The modified bulking agent has a reduced binding capacity such that the bulking agent absorbs from about 50% to about 75% of its weight in oil, implying that the bulking agent itself is not fully coated and/or the additive itself binds oil. The reduced oil binding capacity of the modified bulking agent enables the modified bulking agent to be used in milk chocolate with a reduction in calories of 25%. However, US 5,342,636 is silent with regard to the Casson viscosity and Casson yield of the milk chocolate containing the modified buking agent.

An alternative approach to reducing the calorie content of fat-based food products comprising sugar is the substitution of the sugar with amorphous porous particles. WO 2017/093390 A1 discloses amorphous porous particles for reducing sugar in foods. The amorphous porous particles contain a sugar, a bulking agent (e.g., skimmed milk powder) and surfactant (e.g., casein) having a closed porosity of 20 to 60 %. The porous particles are present in an amorphous form in order to obtain similar sweetness and sensory qualities of the particles in comparison to crystalline granulated sugar. The use of such amorphous porous particles has been suggested to result in a potential reduction of sugar in fat-based food products on a mass basis of 10 to 35 %. However, WO 2017/093390 A1 is silent with regard to the Casson viscosity and Casson yield of these amorphous porous particles in fat-based confection compositions.

There is a need for a particle that may be substituted for sugar in fat-based food products wherein the particles enable significant calorie reduction of the fat-based food products whilst retaining the rheological properties, such as Casson viscosity and Casson yield, of the food product. It would be a significant additional advantage that the particle also retains organoleptic properties similar to those of sugar in food products, it would be of particular advantage that the particle does not impart a dry mouth feel when the fat-based food products are consumed. In addition, it would be of significant advantage that the particle reduced both the calorie content of a fat-based food product and the fat or oil content of a fat-based food product. Such a particle would have the same or similar physical characteristics as crystalline sugar such as oil binding capacity and hygroscopicity. Such a particle would be of particular importance when used as a substitute for sugar in coating compositions for frozen confection products, as the process-ability, resultant uniformity of coating, desired pick-up weight and organoleptic properties of the final coated product of these compositions would be retained.

### SUMMARY OF THE INVENTION

The invention is set out in the appended set of claims. The present invention relates to a coated bulking agent particle comprising from 2 wt% to 70 wt% bulking agent and from 30 wt% to 98 wt% coating composition comprising sugar and surface active agent, wherein the surface active agent is selected from the group consisting of proteins, lecithins, and mixtures thereof, wherein the ratio of sugar to surface active agent in the composition is from 2000:1 to 4:1 and from 50 wt% to 100 wt% of the sugar is in crystalline form; wherein the bulking agent is coated with the coating composition, wherein the bulking agent is selected from the group consisting of deflavoured cocoa powder wherein the cocoa powder is deflavoured using ethanol extraction, washed tea powder, micronized wheat bran, micronized corn bran, and mixtures thereof, with the proviso that the coated bulking agent particle is not a frozen confection coated bulking agent particle. Furthermore, the invention relates to an agglomerated coated bulking agent particle; a process of preparing the particles and a fat-based confection composition comprising the coated bulking agent particles.

It has been discovered that the novel coated bulking agent particles, when used as a substitute for sugar in fat-based food products, result in an up to 70 wt% reduction of sugar of the fat-based food product in comparison to fat-based food products comprising sugar. Additionally, the coated bulking agent particles, when used as a substitute for granulated sugar in fat-based food products, retain the rheological and organoleptic properties of fat-based food products comprising granulated sugar.

### DESCRIPTION OF THE FIGURES

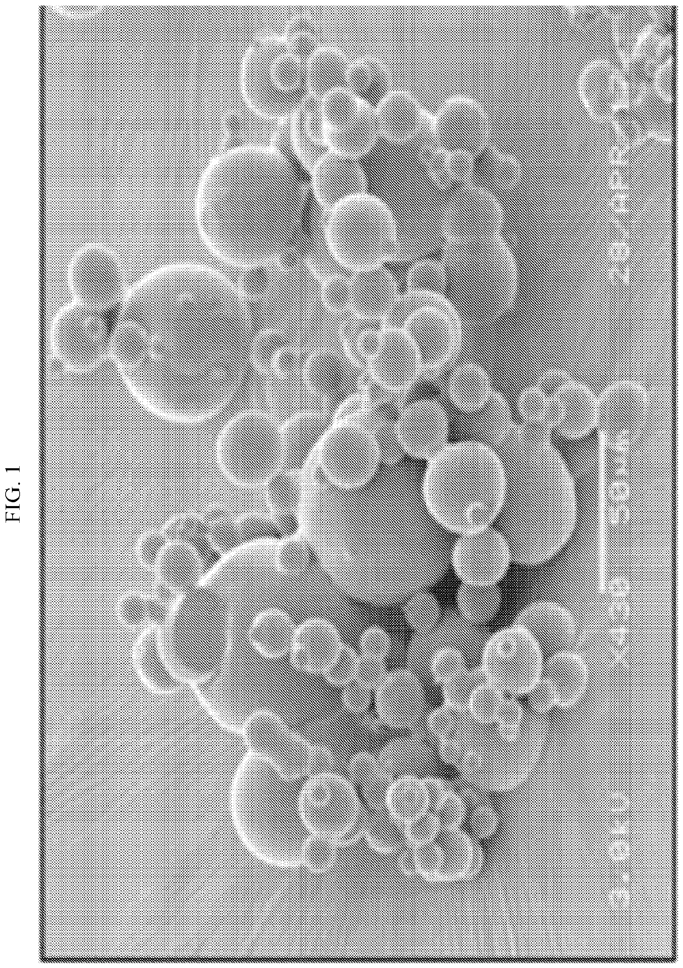

Fig 1: Agglomerated sucrose and protein (0.6 wt% based on sucrose) particles according to Example 1a in amorphous form. Individual particle size of largest coated bulking agent particle is estimated at about 50 µm; largest linear length of agglomerated particle size is estimated at 280 µm.

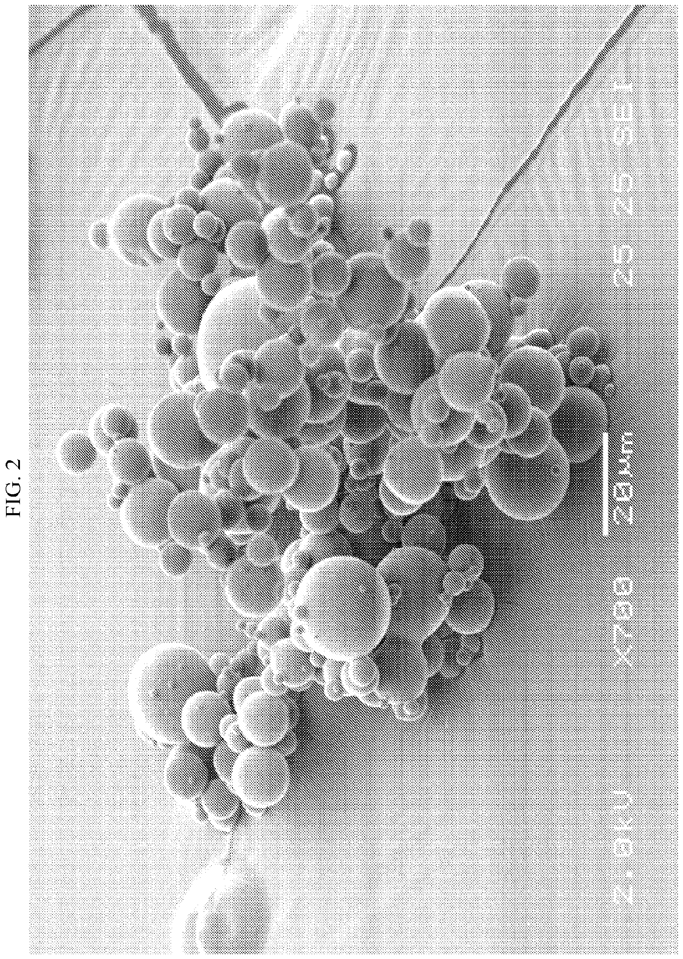

Fig 2: Agglomerated sucrose and protein (0.6 wt% based on sucrose) particles according to Example 1b in amorphous form. Individual particle size of largest coated bulking agent particle is estimated at about 30 µm; largest linear length of agglomerated particle size is estimated at 145 µm.

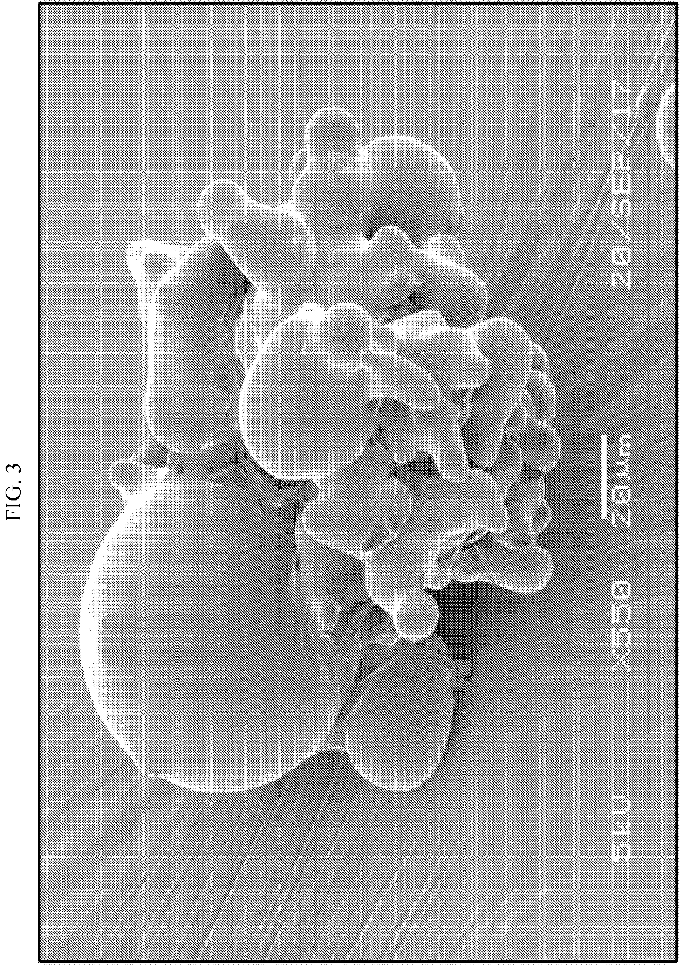

Fig 3: Agglomerated coated cocoa particles (protein is 0.6 wt% based on sucrose) according to Example 5 in amorphous form. Individual particle size of largest coated cocoa particle is estimated at about 75 µm; largest linear length of agglomerated particle size is estimated at 170 µm.

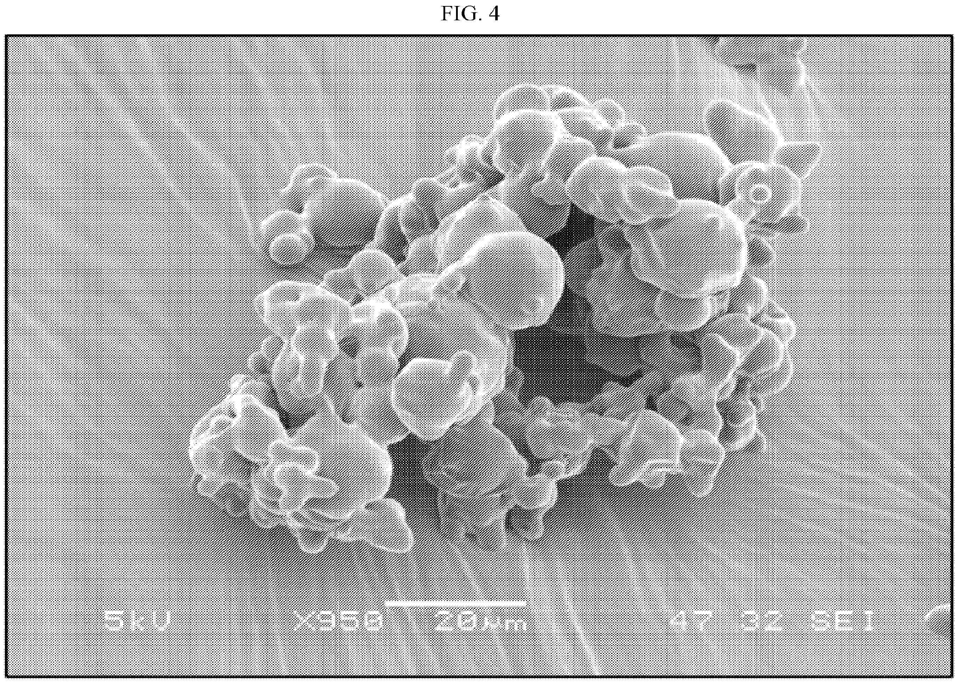

Fig 4: Agglomerated coated cocoa particles (protein is 0.68 wt% based on sucrose) according to Example 6 in amorphous form. Individual particle size of largest coated cocoa particle is estimated at about 20 µm; largest linear length of agglomerated particle size is estimated at 100 µm.

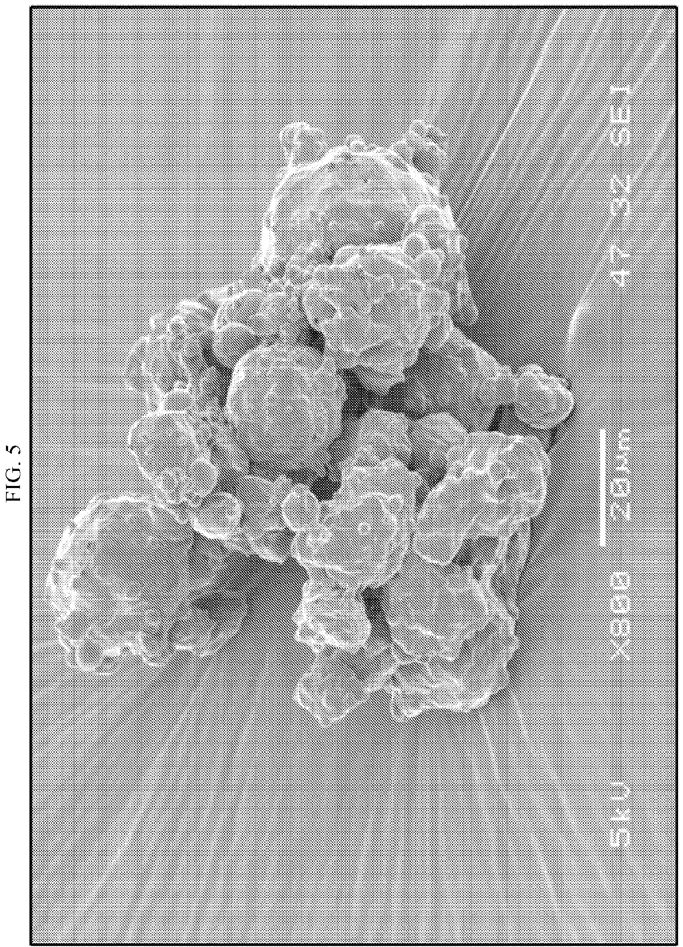

Fig 5: Agglomerated coated cocoa particles (protein is 1.08 wt% based on sucrose) according to Example 7 in amorphous form. Individual particle size of largest coated cocoa particle is estimated at about 33 µm; largest linear length of agglomerated particle size is estimated at 110 µm.

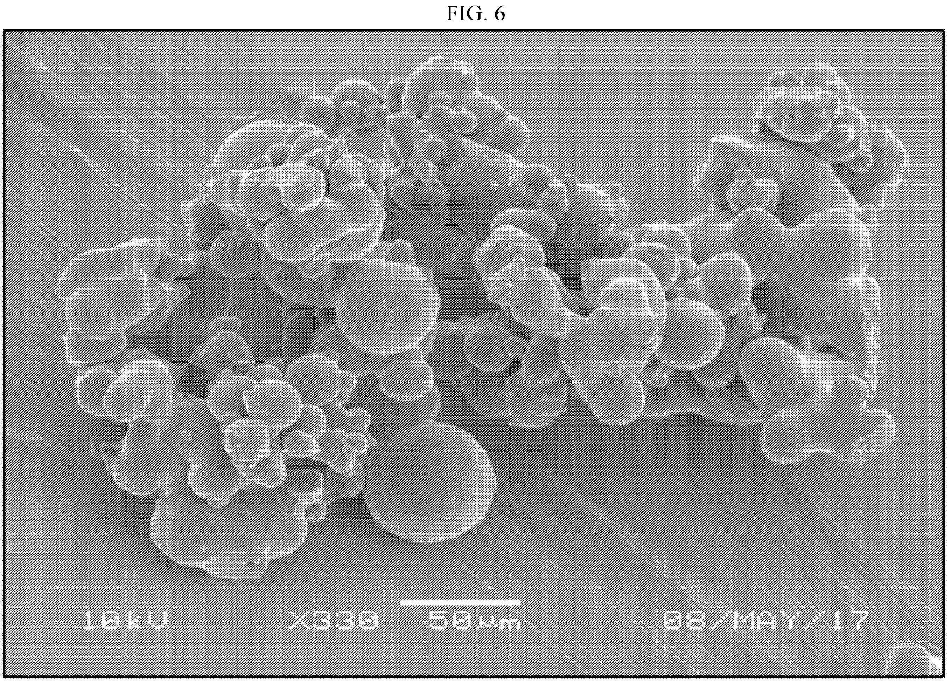

Fig 6: Agglomerated coated tea particles (protein is 0.68 wt% based on sucrose) according to Example 8 in amorphous form. Individual particle size of largest coated tea particle is estimated at about 55 µm; largest linear length of agglomerated particle size is estimated at 380 µm.

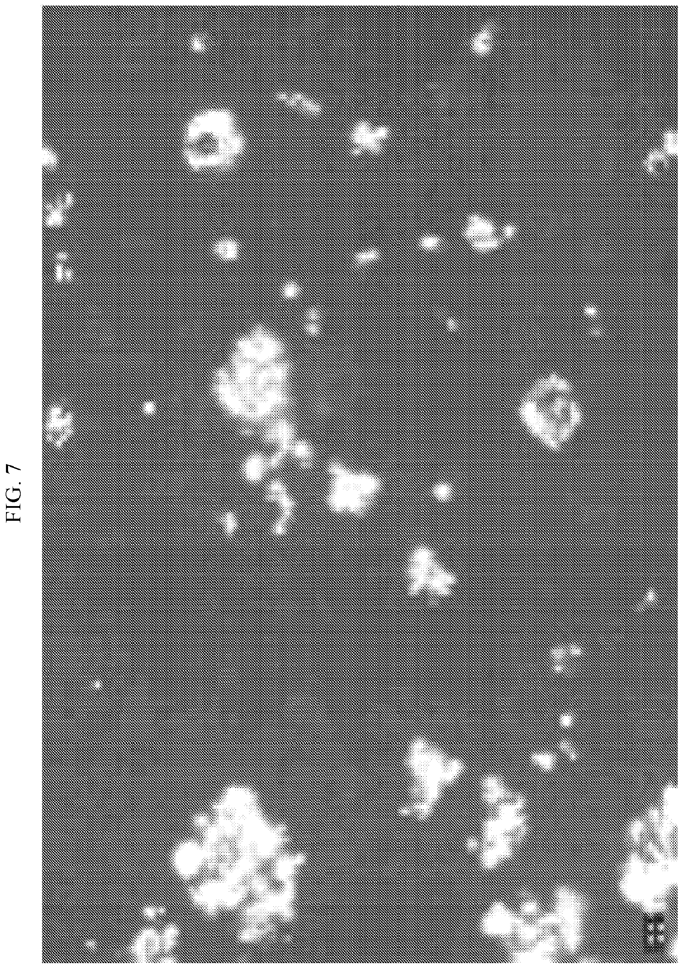

Fig 7: Polarised light image of the particles of Example 18 [sugar (80 wt%); protein (20 wt%)] after crystallisation of the particles. The particles are crystalline as can be seen by the white images on the image.

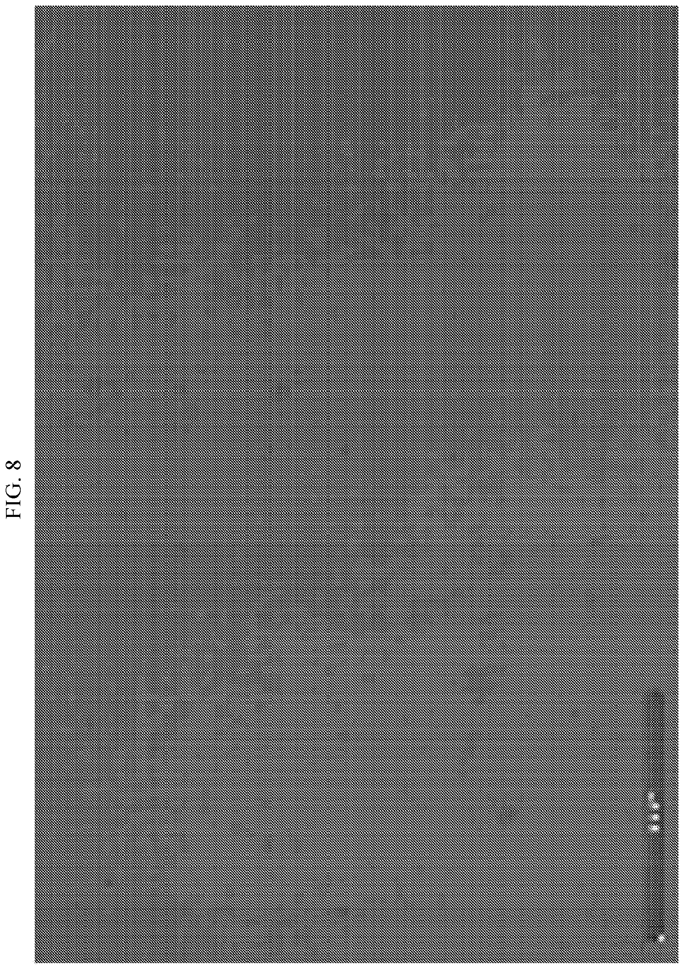

Fig 8: Polarised light image of the particles of Example 19 [sugar (70 wt%); protein (30 wt%)] after crystallisation of the particles. The particles are amorphous as can be seen by the lack of white particles on the image.

### DETAILED DESCRIPTION OF THE INVENTION

The present invention relates to a coated bulking agent particle comprising: from 30 to 98 wt % coating composition comprising sugar and surface active agent and from 2 to 70 wt % bulking agent; wherein 50 to 100 wt% of the sugar is in crystalline form.

Coated bulking agent particle means a particle comprising a bulking agent core and a layer comprising sugar and surface active agent. The layer comprising sugar and surface active agent may also be known as a sugar and surface active agent coating composition. Coated means that the layer comprising sugar and surface active agent are present on at least the surface of the bulking agent. The bulking agent may be substantially or fully coated with a layer comprising sugar and surface active agent. Preferably the bulking agent is fully coated with a layer comprising sugar and surface active agent. When present in a fat-based confection composition the bulking agent particles may be substantially coated, fully coated, or both substantially and fully coated with a layer comprising sugar and surface active agent.

According to the claimed invention, the layer comprising sugar and surface active agent are present on at least the surface of the bulking agent and from 50 to 100 wt% of the sugar is in crystalline form. In a preferred embodiment, from 80 to 100 wt% of the sugar is in crystalline form.

In a preferred embodiment 95 wt% to 100 wt% of the sugar on the surface of the coated bulking agent particle is present in crystalline form. In a particularly preferred embodiment, 98 wt% to 100 wt% of the sugar on the surface of the coated bulking agent particle is present in crystalline form.

According to the claimed invention, the surface active agent is selected from the group consisting of proteins, lecithins, and mixtures thereof.

Protein means water soluble protein and may be selected from the group consisting of: whey protein, sodium caseinate, potassium caseinate, calcium caseinate, soluble vegetable proteins, protein hydrolysates, albumins and mixtures thereof.

Soluble vegetable proteins may be for example: soy protein, pea protein and rice protein. Protein hydrolysates may be for example: hydrolyzed whey protein such as HYGEL from Kerry Foods Ltd; or hydrolyzed caseinates. Albumins may be for example: bovine serum and egg albumin.

Surface active agent may be present in an amount from 0.05 wt% to 20 wt%; from 0.05 wt% to 12 wt%; from 0.05 wt% to 10 wt%; from 0.05 wt% to 8 wt%; from 0.10 wt% to 5 wt%; from 0.10 wt% to 2 wt% based on the weight of the sugar present in the coated bulking agent particle.

Surface active agent may be present in an amount from 0.05 wt% to 12.00 wt%; from 0.05 wt% to 10.00 wt%; from 0.10 wt% to 6.00 wt%; from 0.10 wt% to 4.00 wt%; from 0.15 wt% to 2.00 wt% based on the weight of coated bulking agent particle.

Sugar may be selected from the group consisting of sucrose, glucose, lactose, galactose, allulose, trehalose and mixtures thereof. The coated bulking agent particle comprises from 10 wt% to 98 wt%; from 18 wt% to 98 wt%; from 20 wt% to 98 wt%; from 24 wt% to 98; from 26 wt% to 98 wt%; from 28 wt% to 98 wt% sugar, from 20.00 wt% to 97.50 wt% sugar; from 31.00 wt% to 97.00 wt% sugar; from 35.00 wt% to 91.00 wt% sugar; from 35.00 wt% to 85.00 wt% sugar; from 51.00 wt% to 95.00 wt% sugar.

The bulking agent is insoluble cellulosic fibre derived from plant-based material such as dried tea leaves, cocoa, cocoa-shell, cereals, pseudocereals, and is present in particulate form. In a non-claimed embodiment, the insoluble cellulosic material is derived from plant-based material such as coffee beans, fruit, vegetable, nuts, seeds. According to the claimed invention, the bulking agent is selected from the group consisting of deflavoured cocoa powder wherein the cocoa powder is deflavoured using ethanol extraction, washed tea powder, micronized wheat bran, micronized corn bran, and mixtures thereof, with the proviso that the coated bulking agent particle is not a frozen confection coated bulking agent particle. Exhausted cocoa powder (i.e. deflavoured cocoa powder using ethanol extraction), is well known in the art *(e.g.* WO2001093690*).* The ethanolic extraction process removes constituents of the cocoa bean, which impart a bitter, disagreeable flavor, for instance cocoa polyphenols, such as procyanidins. "Exhausted cocoa powder" can be obtained, for instance, from the company PROVA). As referred to herein, washed tea powder is the same as exhausted tea powder. In a non-claimed embodiment, the insoluble cellulosic fibre is selected from the group consisting of oat fibre; bran fibre; wheat fibre; rice fibre; bamboo fibre; maize/corn fibre; corn-cob fibre; coconut fibre; potato fibre; sugar beet fibre; sugar cane fibre; rice bran; oat bran; pea fibre; vegetable powders; tomato powder; beetroot powder; ground cinnamon; spent coffee grounds; milled tea particles; debittered cocoa (e.g. cocoa powder washed with water). In further non claimed embodiments, the bulking agent may be washed coffee powder, wherein washed coffee powder is the same as exhausted coffee powder; fruit powders (e.g., apple fibres) and mixtures thereof. Maize/corn bran and maize/corn fibre are distinct products (see for instance, Rose et al., J Sci Food Agric 2010; 90: 915-924 "Utilisation of corn (Zeamays) bran and corn fiber in the production of food components*").* The bulking agent may also be an insoluble protein obtainable from, for example: zein, pea, rice, soya, fava, milk, potato, lupin or lentil. The bulking agent may also be an insoluble mineral, for example: calcium carbonate or calcium phosphate..

According to one aspect of the claimed invention, the bulking agent is micronized wheat bran or micronized corn bran. Optionally, any one of the foregoing bulking agents can be in micronized form. "Micronized" means the bulking agent is subjected to a particle size reduction technique to achieve a particle size of less than 100microns (i.e., a D90 of less than 100microns, wherein D90 is the volume diameter where 90% of the volume distribution of the particles is below this value) before being used in the present invention. Any particle size reduction technique that is known in the art may be used in accordance with the present invention, such as milling, micronization, grinding, extrusion, high pressure homogenization, abrasion, fractionation, or pulverizing. A combination of particle size reduction techniques may also be used. The bulking agent may thus have a particle size D90 of less than 100 microns, less than 90 microns, less than 80 microns, less than 70 microns, less than 60 microns, less than 50 microns, less than 40 microns, less than 30 microns, less than 20 microns, or less than 10 microns. This can be measured using a Mastersizer system (Malvern).

Any known milling method may be used in accordance with the present invention. For example, ball-milling, wet-ball milling, or micro-milling in an impact mill.

Micronization may be used to provide very fine particles (e.g., less than 100 microns). Micronization methods are known in the industry. Micronization usually involves milling at high speed (e.g., at least 3000 rpm) using a high performance mill, such as a cell mill or jet mill.

A cell mill is a highly efficient mechanical mill with multiple rotors mounted on a vertical shaft. Product quality is optimised by control of mill speed through a frequency inverter, which also limits the starting current.

A jet mill (also known as a microniser) typically comprises a spiral jet which uses compressed gas to produce superfine materials by autogenous comminution. Feed material is inspirated by a small proportion of the compressed gas through a venturi into the grinding chamber where numerous angles nozzles accelerate the material into particle-particle impact. There are no moving parts in the mill and no mechanical forces are applied to the grinding process. Variation in gas pressure and residence time is possible.

The particle size reduction technique may also include size classification and/or separation steps (e.g., sieving or sifting). For example, a TTC/TTD Air Classifier^{®} or Mikro^{®} Acucut Air classifier model sold by Hosokawa Micron Powder Systems may be used.

The particle size reduction technique may be cryogenic.

The bulking agent is selected from the group consisting of deflavoured cocoa powder wherein the cocoa powder is deflavoured using ethanol extraction, washed tea powder, micronized wheat bran, micronized corn bran, and mixtures thereof.

Preferably the bulking agent has been treated to remove flavour, aroma or both flavour and aroma. Preferably, the bulking agent has reduced flavour, reduced aroma or both reduced flavour and reduced aroma compared to an untreated bulking agent. Preferably, the bulking agent is without aroma, without flavour or without both aroma and flavour. During treatment to reduce flavour, aroma or both flavour and aroma, the bulking agent is centrifuged to obtain a pellet that comprises the bulking agent and water. Consequently, the bulking agent has a reduced water binding capacity in comparison to the bulking agent in dry form prior to centrifugation. The water binding capacity of the bulking agent is preferably less than 4g per g of dry bulking agent.

The coated bulking agent particle of the claimed invention comprises 2 wt% to 70 wt% bulking agent. The coated bulking agent particle may comprise from 3.00 wt% to 70.00 wt%; from 2 wt% to 68.00 wt%; from 2 wt% to 66.00 wt%; from 2 wt% to 64.00 wt%; from 2 wt% to 62.00 wt%; from 2 wt% to 60.00 wt%; from 3.00 wt% to 49.00 wt%; from 9.00 wt% to 45.00 wt%; from 15.00 wt% to 45.00 wt% bulking agent.

An embodiment not explicitly claimed relates to a coated bulking agent particle comprising: from 10.00 wt% to 98.00 wt % sugar; from 0.05 wt% to 20.00 wt % surface active agent; and from 1.95 wt% to 70.00 wt % bulking agent; wherein 50 to 100 wt% of the sugar is in crystalline form.

The present invention relates to a coated bulking agent particle comprising: from 20.00 wt% to 97.50 wt % sugar; from 0.05 wt% to 20.00 wt % surface active agent; and from 2.45 wt% to 60.00 wt % bulking agent; wherein 50 to 100 wt% of the sugar is in crystalline form.

The present invention relates to a coated bulking agent particle comprising: from 31.00 wt% to 97.00 wt % sugar; from 0.05 wt% to 20.00 wt % surface active agent; and from 3.00 wt% to 49.00 wt % bulking agent; wherein 50 to 100 wt% of the sugar is in crystalline form.

The present invention relates to a coated bulking agent particle comprising: from 35.00 wt% to 91.00 wt % sugar; from 0.05 wt% to 20.00 wt % surface active agent; and from 9.00 wt% to 45.00 wt % bulking agent; wherein 50 to 100 wt% of the sugar is in crystalline form.

The present invention relates to a coated bulking agent particle comprising: from 35.00 wt% to 85.00 wt % sugar; from 0.05 wt% to 20.00 wt % surface active agent; and from 14.95 wt% to 45.00 wt % bulking agent; wherein 50 to 100 wt% of the sugar is in crystalline form.

The present invention relates to a coated bulking agent particle comprising: from 51.00 wt% to 95.00 wt % sugar; from 0.05 wt% to 20.00 wt % surface active agent; and from 4.95 wt% to 48.95 wt % bulking agent; wherein 50 to 100 wt% of the sugar is in crystalline form.

The coated bulking agent particle comprises from 2 wt% to 70 wt% bulking agent and from 30 wt% to 98 wt% of a coating composition comprising sugar and surface active agent; wherein the ratio of sugar to surface active agent is from 2000: 1 to 4:1 and from 50 wt% to 100 wt% of the sugar is in crystalline form.

Disclosed is a coated bulking agent particle comprising from 1 wt% to 68 wt% bulking agent and from 32 wt% to 99 wt% of a coating composition comprising sugar and surface active agent; wherein the ratio of sugar to surface active agent is from 2000: 1 to 4:1 and 50 wt% to 100 wt% of the sugar is in crystalline form.

Disclosed is a coated bulking agent particle comprising from 1 wt% to 66 wt% bulking agent and from 34 wt% to 99 wt% of a coating composition comprising sugar and surface active agent; wherein the ratio of sugar to surface active agent is from 2000: 1 to 4:1 and 50 wt% to 100 wt% of the sugar is in crystalline form.

Disclosed is a coated bulking agent particle comprising from 1 wt% to 64 wt% bulking agent and from 36 wt% to 99 wt% of a coating composition comprising sugar and surface active agent; wherein the ratio of sugar to surface active agent is from 2000: 1 to 4:1 and 50 wt% to 100 wt% of the sugar is in crystalline form.

Disclosed is a coated bulking agent particle comprising from 1 wt% to 62 wt% bulking agent and from 38 wt% to 99 wt% of a coating composition comprising sugar and surface active agent; wherein the ratio of sugar to surface active agent is from 2000:1 to 4:1 and 50 wt% to 100 wt% of the sugar is in crystalline form.

Disclosed is a coated bulking agent particle comprising from 1 wt% to 60 wt% bulking agent and from 40 wt% to 99 wt% of a coating composition comprising sugar and surface active agent; wherein the ratio of sugar to surface active agent is from 2000:1 to 4:1 and 50 wt% to 100 wt% of the sugar is in crystalline form.

Disclosed is a coated bulking agent particle comprising from 1 wt% to 70 wt% bulking agent and from 30 wt% to 99 wt% of a coating composition comprising sugar and surface active agent; wherein the ratio of sugar to surface active agent is from 100:1 to 4:1 and 50 wt% to 100 wt% of the sugar is in crystalline form.

Disclosed is a coated bulking agent particle comprising from 1 wt% to 70 wt% bulking agent and from 30 wt% to 99 wt% of a coating composition comprising sugar and surface active agent; wherein the ratio of sugar to surface active agent is from 100:1 to 16:1 and 50 wt% to 100 wt% of the sugar is in crystalline form.

The coated bulking agent particle comprises from 2 wt% to 49 wt% bulking agent and from 51 wt% to 98 wt% of a coating composition comprising sugar and surface active agent; wherein the ratio of sugar to surface active agent is from 2000:1 to 4:1 and 50 wt% to 100 wt% of the sugar is in crystalline form.

The coated bulking agent particle comprises from 2 wt% to 49 wt% bulking agent and from 51 wt% to 98 wt% coating composition comprising sugar and surface active agent; wherein the ratio of sugar to surface active agent is from 100: 1 to 4:1 and 50 wt% to 100 wt% of the sugar is in crystalline form.

The coated bulking agent particle comprises from 2 wt% to 49 wt% bulking agent and from 51 wt% to 98 wt% coating composition comprising sugar and surface active agent; wherein the ratio of sugar to surface active agent is from 100: 1 to 16:1 and 50 to 100 wt% of the sugar is in crystalline form.

The coated bulking agent particle comprises from 3 wt% to 44 wt% bulking agent and from 56 wt% to 97 wt% coating composition comprising sugar and surface active agent; wherein the ratio of sugar to surface active agent is from 2000:1 to 4:1 and 50 wt% to 100 wt% of the sugar is in crystalline form.

The coated bulking agent particle comprises from 3 wt% to 44 wt% bulking agent and from 56 wt% to 97 wt% coating composition comprising sugar and surface active agent; wherein the ratio of sugar to surface active agent is from 100: 1 to 4:1 and 50 wt% to 100 wt% of the sugar is in crystalline form.

The coated bulking agent particle comprises from 3 wt% to 44 wt% bulking agent and from 56 wt% to 97 wt% coating composition comprising sugar and surface active agent; wherein the ratio of sugar to surface active agent is from 100: 1 to 16:1 and 50 wt% to 100 wt% of the sugar is in crystalline form.

Preferably the coating composition does not comprise an oil, fat or mixture thereof that does not originate from the bulking agent. Preferably the coated bulking agent does not comprise an oil, fat or mixture thereof that does not originate from the bulking agent.

Preferably the coating composition is a homogenous composition. The coating composition is physically bound to the bulking agent and the coated bulking agent particles themselves survive shear forces applied through, for example, ball milling. Shear forces, such as those applied by ball milling, may separate coated bulking agent particles that are in an agglomerated form. One coated bulking agent particle is one particle, i.e.: a coated bulking agent particle comprises a bulking agent substantially at the core surrounded by a coating composition that is physically bound to the bulking agent.

The terms sugar crystal, crystalline sugar, granulated crystalline sugar and sugar in crystalline form are interchangeable and mean a solid sugar material whose constituents (i.e. sugar molecules) are arranged in a highly ordered microscopic structure, forming a crystal lattice. In addition, macroscopic single crystals are usually identifiable by their geometrical shape, consisting of flat faces with specific, characteristic orientations.

An amorphous solid, or non-crystalline solid is a solid that lacks the long-range order that is characteristic of a crystal. A glass is an amorphous solid that exhibits a glass transition. Glasses are commonly found in spray dried sugar based materials, carbohydrate materials and mixture thereof.

The bulking agent in hydrated form has a particle size volume mean diameter D(4,3) of from 10 to 50 µm; from 10 to 40 µm; from 15 to 35 µm; from 17 to 31 µm.

The bulking agent in hydrated form has a particle size surface area mean diameter D(3,2) of from 2 to 30 µm; from 2 to 20 µm; from 3 to 15 µm; from 5 to 12 µm.

The coated bulking agent in crystalline form has a particle size volume mean diameter D(4,3) of from 10 to 60 µm; 10 to 40 µm; from 10 to 31 µm; from 12 to 30 µm.

The coated bulking agent in crystalline form has a particle size surface area mean diameter D(3,2) of from 2 to 40 µm; 2 to 20 µm; from 3 to 15 µm; from 5 to 12 µm.

It should be noted that when particle size is measured within a chocolate system, additional particles that are not coated bulking agent particles contribute to the average size calculated. Such additional particles include milk protein, crystalline sugar and cocoa.

Volume weighted mean diameter [D(4,3)] (also known as De Brouckere Mean Diameter) is the mean diameter size corresponding to spheres with the same volume. Sauter mean diameter [known as SMD, *d*₃₂ or D(3, 2)] is the mean diameter size of spheres with the corresponding surface area. Calculation of the volume weighted mean diameter and Sauter mean diameter are provided in: [A Guidebook to Particle Size Analysis: Horiba Scientific].

**In** a non-claimed embodiment, the coated bulking agent particle comprises a bulking agent selected from the group consisting of spent coffee grounds; milled tea particles; debittered cocoa and mixtures thereof; a sucrose and hydrolyzed whey protein.

Agglomerated coated bulking agent particles means a plurality of coated bulking agent particles associated to form one particle; wherein the individual coated bulking agent particles may be separated by, for example: shear forces. Such shear forces may be generated by for example: grinding, blending, overhead mixing, such as Silverson mixing (for example Silverson LC5 mixer with a 20 mm screen) roller milling; ball milling; or a gentle conching process. Such methods are used during preparation of a fat-based confection composition, such as addition of the coated bulking agent particle to a prepared fat-based confection composition followed by mixing; or during the preparation of the fat-based confection composition itself.

Agglomerated coated bulking agent particles may be formed during spray drying of the coated bulking agent particles. Agglomerated coated bulking agent particles obtained directly from the spay drying apparatus are in a form selected form the group consisting of: amorphous form, crystalline form and mixtures thereof. Such agglomerated coated bulking agent particles are from about 100 to about 500 µm in length; from about 150 to about 450 µm in length; from about 200 to about 400 µm in length. Wherein the length is measured as an estimate of the longest linear dimension observable by SEM images. The coated bulking agent particles may also be measured by the same method and have a size of the largest visible coated bulking agent particle of from about 15 to about 80 µm in length; from about 20 to about 75 µm in length. Furthermore, such agglomerated coated bulking agent particles comprising coated bulking agent particles; wherein the agglomerated particle and coated bulking agent particle have a ratio of length estimated from SEM images of from 1:1 to 10:1; from 2:1 to 8:1.

In order for the coated bulking agent particles to form a crystalline form, amorphous coated bulking agent particles must have a crystallisation temperature above that of the glass transition temperature and below that of the sugar melting temperature. Preferable the onset crystallisation temperatures are from between 45 °C and 140°C, from between 65 °C and 140 °C, from between 70°C and 130 °C; from between 80°C and 129 °C.

Coated bulking agent particles, in individual or agglomerated form, may be added to any fat-based food product to replace granulated sugar. The fat-based food product must be substantially anhydrous. Substantially anhydrous means that the composition comprises no more than 5 wt% water, preferably no more than 3 wt% water and more preferably no more than 1 wt% water. In an embodiment the fat-based food product is a fat-based confection composition. A fat-based confection composition may also be known as an oilbased confection composition. The claimed invention covers a fat-based confection composition comprising one or more particles selected from the group consisting of: coated bulking agent particles according to the claimed invention, agglomerated coated bulking agent particles according to the claimed invention, and mixtures thereof.

Exemplary fat-based confection compositions include: ambient chocolate, chocolate flavour coating; frozen confection coating compositions, fat-based sauces and inclusions. Preferably, the fat-based confection composition is a frozen confection coating composition. Frozen confection coating composition means a composition that, when in liquid form and applied to the surface of a frozen confection, solidifies on or shortly after contact with the frozen confection. Frozen confection coating composition means a fat-based edible material for use to form a coating layer on the surface of a frozen confection. Such coating compositions include chocolate or chocolate analogues (also known as couverture or compound chocolate). Exemplary coating composition formulations are provided in WO 2010/072481 A1; 'Ice Cream' 5th Ed., Marshall and Arbuckle, 1996, Chapman & Hall, New York. N.Y., page 300; and 'Ice Cream' 7th Ed., Goff and Hartel, 2013 Springer, New York, N. Y., pages 274-283.

Frozen confection means a sweet-tasting fabricated foodstuff intended for consumption in the frozen state (i.e., under conditions wherein the temperature of the foodstuff is less than 0 ° C). The frozen confection is selected from the group consisting of water ice, milk-ice, ice cream, frozen yoghurt, frozen custard, sorbet, gelato and mixtures thereof. Ice cream may be selected from the group consisting of dairy ice cream, non-dairy ice cream and mixtures thereof. Preferably the frozen confection comprises ice cream, frozen yoghurt or mixtures thereof. The frozen confection may be prepared, for example, according to methods provided in the 'The Science of Ice Cream', C. Clarke, RSC 2004, chapters 3, 4 and 8; and 'Ice Cream' 5th Ed., Marshall and Arbuckle, 1996, Chapman & Hall, New York. N.Y., in particular chapters 11, 12 and 22.

Frozen confection products comprise one or more frozen confections. Frozen confection products may comprise one or more frozen confections and one or more additional components such as inclusions, one or more frozen confection sauces or mixtures thereof or one or more coatings. Inclusions include for example, fruit pieces, chocolate pieces, confectionary, nuts and bakery goods (wafer, biscuit and cake pieces), as described in 'The Science of Ice Cream', C. Clarke, RSC 2004, page 54-59. Additional components may be selected from the group consisting of inclusions, one or more frozen confection sauces and mixtures thereof. The frozen confection sauce composition, wherein at least part of the frozen confection sauce composition is positioned on top of the one or more frozen confections, may further comprise a dry coating, such as inclusions, as described in the 'The Science of Ice Cream', C. Clarke, RSC 2004, page 98.

The present invention provides a food product comprising the coated bulking agent particles, the agglomerated coated bulking agent particle, the fat-based composition as defined by the appended claims together with one or more further food ingredients, with the proviso the food product is not a frozen confection containing chocolate or chocolate-like compositions, preferably where the food product is selected from confectionary products, dairy products, spreads, desserts, and bakery products. The coated bulking agent particles may be used, for example, as a coating, filling and/or inclusion in or on the food product.

Food products may include, by way of example only, confectionery products such as chocolate bars, bonbons, truffles, and pralines, spreads, desserts, including chilled desserts such as yogurts, mousses, dairy creams, creamy desserts, dairy products, and bakery products such as cookies or patisserie confections. Other possible applications will be apparent to the person skilled in the art. The coated bulking agent particles of the present invention is particularly suited for use in frozen confection products such as dairy or non-dairy ice-cream products, and frozen yogurt products. Frozen confection products containing chocolate or chocolate-like compositions as such, however, are not part of the present invention.

As used herein, "coatings" and "coating composition" means a composition of one or more layers encasing a food product - whether fully or only in part (i.e. present only on part of the food product, such as a layer deposited on top or on one or more surface of the food product). Typically a coating layer has a thickness of from 0.5mm to 1cm, more preferably from 1mm to 5mm, even more preferably from 1mm to 3mm, yet more preferably from 1mm to 2mm, most preferably from 1mm to 1.5mm. Any suitable coating method known in the art can be used to obtain a food product coated with the coated bulking agent particles of the present invention, including enrobing, dipping, spraying, water fall or curtain, showering or bottoming.

When used as a filling, the coated bulking agent particles of the present invention will be fully or partially encased by the food product. The filling can be one or more continuous fillings or layers, or it can be present as smaller particulate filling dispersed throughout the food product, e.g., in the form of chunks, chips, or flakes (also referred to as "inclusions").

Any method known in the art can be used to include the coated bulking agent particles of the present invention as a filing in a food product. For example, the coated bulking agent particles may be mixed into the food product in particulate form or it may be injected into the food product.

Thus, by way of example, the coated bulking agent particles of the present invention may be used as coatings or toppings and/or fillings for food products.

This application is specifically directed towards coated bulking agent particles, agglomerated coated bulking agent particles, and mixtures thereof for food products, including chocolate or chocolate-like compositions, with the proviso that the coated bulking agent particle is not a frozen confection coated bulking agent particle. Frozen confection products containing chocolate or chocolate-like compositions as such are not part of the present invention. Chocolate or chocolate-like compositions include chocolate or chocolate analogues (also known as couverture or compound chocolate).

Coated bulking agent particles prepared by the process of steps a. and b., and optionally c., that are present in frozen confection products are called frozen confection coated bulking agent particles. The term 'frozen confection coated bulking agent particles' is solely used to define the use of the coated bulking agent particles prepared by the process of steps a. and b., and optionally c., and are identical in all physical characteristics and forms to coated bulking agent particles prepared for alternative applications.

The term 'chocolate' means dark, chocolate, milk chocolate, white chocolate, flavoured chocolate. Compound chocolate is made from a combination of cocoa solids, non-cocoa butter vegetable fats and sweeteners.

In a further embodiment, the coated bulking agent particles, in individual or agglomerated form, may be used independently or together with other dry ingredients as, for example, a dry sugar coating for bakery or sweet products.

The invention further relates to a process for the preparation of a coated bulking agent particle comprising the steps of:
a. Mixing sugar, surface active agent, bulking agent and water, wherein the surface active agent is selected from the group consisting of proteins, lecithins, and mixtures thereof;
b. Spraying and drying the mix of step a.
c. Optionally further drying the product of step b.

A process for the preparation of a coated bulking agent particle; wherein the bulking agent is pre-wetted prior to step a. Pre-wetted means the bulking agent has been contact with water and comprises an amount of water greater than its dried state.

Pre-wetted method includes preparing a slurry of the bulking agent with water and milling the wetted bulking agent.

A process for the preparation of a coated bulking agent particle; wherein the water of step a. is at least 60°C.

A process for the preparation of a coated bulking agent particle; wherein the product of step c. is added to a fat-based confection composition.

A process for the preparation of a coated bulking agent particle; further comprising a step of grinding or mixing the fat-based confection composition comprising the product of step c.

A process for the preparation of a coated bulking agent particle; wherein the drying of step c. is under vacuum at a temperature of from 50 to 90 °C; from 50 to 100°C; from 60 to 100°C; from 60 to 85 °C; from 75 to 85 °C.

A process for the preparation of a coated bulking agent particle; wherein the inlet temperature of the chamber of step a. is from 80 to 200 °C; from 100 to 180 °C; from 120 to 160 °C.

A process for the preparation of a coated bulking agent particle; wherein the outlet temperature of the chamber of step a. is from 50 to 120 °C; from 60 to 100 °C.

### EXAMPLES

### Preparation of Bulking Agent:

### Example 2:

Spent coffee grounds [Douwe Egberts Pure Gold, medium roast] were collected and wet milled using a VWR ball mill operating at full power for 90 minutes to achieve to a particle size of 20 µm, as determined by a Mastersizer measurement [Mastersizer 2000; Malvern Panalytical]. The material was then wet sieved through a 25 µm stainless steel sieve with running water to obtain a fraction between 32 and 20 µm as determined by a Mastersizer measurement. The material was then mixed with boiling water and centrifuged on an Sorvall^{®} RC3C centrifuge [ThermoFisher Scientific] at 5000rpm for 15 minutes at 4°C. The process was repeated until the material was substantially free of flavor and aroma. The resultant pellet comprised spent coffee grinds (16.7 wt%, dry weight) and the remainder was water.

### Examples 3 - 7:

Cocoa particles [Cargill (10-12% fat FTNG k)] were washed with hot water (70°C) through a 20 µm stainless steel sieve [Endcotts]. Washing was continued until a clear filtrate was obtained. The cocoa particles were then transferred to a 25µm sieve sitting over a 20 µm sieve and the material was washed again. The cocoa particles were then mixed with boiling water, cooled and centrifuged on an RC3C centrifuge [ThermoFisher Scientific] at 5000rpm for 15 minutes at 4°C. The centrifugation process was repeated until the cocoa particles were substantially free of aroma. The resultant pellet comprised cocoa [7.3 wt%, dry weight] and the remainder was water.

### Example 8:

Commercial grade black tea was jet milled [Hosakawa Micron Ltd.] to obtain a powder with the physical properties provided in Table 1.

### Example 9

Pea protein [Puris Pea 870; Cargill] was mixed with boiling water, cooled and centrifuged corresponding to Ex 3-7. The centrifugation process was repeated until the supernant was clear. The resultant pellet comprised insoluble pea protein and the supernant comprised soluble pea protein. The insoluble protein was dispersed in water, sugar and whey protein and homogenized at 400 bar.

### Preparation of Coated Bulking Agent:

### General method:

### Example 2

Sucrose (280g), whey protein (2.8g) and wet bulking agent [359g (dry weight 60 g)] were slurried in water (920 ml). The slurry was heated and retained at 65°C, and spray dried on a Buchi Mini B290 mini-spray dryer. The spray dryer conditions were as follows:

| | |
|---|---|
| Flow rate= | Pump setting 4 (equivalent to 2.8g/ minute) |
| Inlet temp= | 160°C |
| Outlet temp= | 100°C |
| q flow = | 45 |

### Examples 1, 3-8:

The same procedure as Example 2 was followed for Examples 1a, 3-8 using the compositions provided in Table 1.

For Examples 1a, 3 and 4 the spray drying conditions were:

| | |
|---|---|
| Flow rate= | Pump setting 11 |
| Inlet temp= | 130°C |
| Outlet temp= | 70°C |
| q flow = | 45 |

For Example 1b the spray drying conditions were:

| | |
|---|---|
| Flow rate= | Pump setting 10 |
| Inlet temp= | 120°C |
| Outlet temp= | 70°C |
| q flow = | 45 |

For Examples 5, 6 and 7 the spray drying conditions were:

| | |
|---|---|
| Flow rate= | Pump setting 4.5 |
| Inlet temp= | 160°C |
| Outlet temp= | 80°C |
| q flow = | 45 |

For Example 8 the spray drying conditions were:

| | |
|---|---|
| Flow rate= | Pump setting 2 |
| Inlet temp= | 160°C |
| Outlet temp= | 94°C |
| q flow = | 44 |

### Example 9a:

The same procedure as Example 2 was followed using the compositions provided in Table 1.

The spray drying conditions were:

| | |
|---|---|
| Flow rate= | Pump setting 7 |
| Inlet temp= | 190°C |
| Outlet temp= | 100°C |
| q flow = | 40 |

### Examples 9b, 9c and 9d:

The same procedure as Example 2 was followed using the compositions provided in Table 1.

The spray drying conditions were:

| | |
|---|---|
| Flow rate= | Pump setting 7 |
| Inlet temp= | 190°C |
| Outlet temp= | 100°C |
| q flow = | 40 |

### Examples 10-17

The same procedure as Example 2 was followed using the compositions provided in Table 2.

The spray drying conditions were:

| | |
|---|---|
| Flow rate= | Pump setting 10 |
| Inlet temp= | 160°C |
| Outlet temp= | 80°C |
| q flow = | 45 |

### Examples 18-19

The same procedure as Example 2 was followed using the compositions provided in Table 1.

The spray drying conditions were:

| | |
|---|---|
| Flow rate= | Pump setting 7 |
| Inlet temp= | 190°C |
| Outlet temp= | 100°C |
| q flow = | 40 |

### Preparation of Crystalline Coated Bulking Agent:

### Example 1:

The amorphous, agglomerated coated bulking agent particles were collected from the sample chamber of the spray dryer and dried under vacuum at 80°C for 72 hours to obtain agglomerated coated bulking agent particles in crystalline form.

### Example 2:

The amorphous, agglomerated coated bulking agent particles were collected from the sample chamber of the spray dryer and dried under vacuum at 80°C for 72 hours to obtain agglomerated coated bulking agent particles in crystalline form.

### Examples 3-4:

The amorphous, agglomerated coated bulking agent particles were collected from the sample chamber of the spray dryer and dried under vacuum at 80°C for 2 days to obtain agglomerated coated bulking agent particles in crystalline form.

### Examples 5-7:

The amorphous, agglomerated coated bulking agent particles were collected from the spray dryer and heated at 80°C for 2 days to obtain agglomerated coated bulking agent particles in crystalline form.

### Example 8:

The amorphous, agglomerated coated bulking agent particles were collected from the spray dryer and subsequently analysed.

### Examples 9a, 18 and 19:

The amorphous, agglomerated coated bulking agent particles were collected from the spray dryer and heated at 80°C overnight to obtain agglomerated coated bulking agent particles in crystalline form (Examples 9a and 18); Example 19 particles did not crystallise, the particles obtained after drying were amorphous.

### Examples 9b:

The amorphous, agglomerated coated bulking agent particles were collected from the spray dryer and heated at 80°C overnight to obtain agglomerated coated bulking agent particles in crystalline form.

### Example 9c:

The crystalline, agglomerated coated bulking agent particles were collected from the spray dryer and subsequently analysed.

### Examples 9d:

The amorphous, agglomerated coated bulking agent particles were collected from the spray dryer and subsequently analysed.

### Examples 10-17:

The amorphous, agglomerated coated bulking agent particles were collected from the sample chamber of the spray dryer. The initial particles were in the amorphous form. DSC analysis was then conducted on the amorphous materials.

All examples: Individual coated bulking agent particles are obtainable from their agglomerated form through a low shear method of grinding, such as ball milling.

### Preparation of Fat-Based Confection Compositions Comprising Coated Bulking Agent Particles:

A fat-based confection composition was prepared in 1.0-1.5 kg batches as follows: First, the emulsifier was added to the cocoa butter at 45°C to obtain an emulsifier and cocoa butter mix. Coated bulking agent particles according to Example 2 (39.1g) were added to (40.9 g) of melted emulsifier and cocoa butter mix using a Waring blender. The dry ingredients (sucrose and cocoa) were blended together and added to the cocoa butter and emulsifier mix comprising the coated bulking agent particles and shear was applied until the mixture began to flow easily. The composition was then transferred into a Weiner chocolate ball mill and milled at 40°C on 60 % speed setting until the particles were below 25µm. The slurry was milled and the particle size was measured at regular intervals using a Draper external digital micrometer. Once the particle size had been reduced to less than 25 µm milling, the fat-based confection composition was then removed and transferred into a chocolate mould and stored at -25°C.

### Fat-Based confection compositions comprising coated bulking agent particles of examples 9b, 9c and 9d Pick-Up Weights:

Frozen confection (90 ml) on a stick was held at -18°C overnight, weighed and was then dipped into a fat-based confection composition comprising coated bulking agent particles of examples 9b, 9c or 9d. The fat-based confection compositions were held at temperatures between 45 and 50°C. The temperature was varied slightly in order to achieve a dipping volume of 15 ml. The ice cream was lowered into the chocolate and immediately pulled out before allowing the chocolate to run off. Once the chocolate was substantially solid and the chocolate stream had stopped, the last drop was shaken off from the end of the blank. The weight if the chocolate picked up on the ice cream blank was subsequently recorded.

### Method for Measurement of D(4,3) and D(3,2):

### Spray Dried Coated Bulking Agent Particles:

The coated bulking agent particles dispersed in chocolate or coconut oil were heated to 40°C. Aliquots of the dispersion were added to a medium chain triglyceride (MCT; DANISCO) as the dispersant. Samples of particles were added to the dispersant chamber until the required sample obscuration was achieved. An average of 3 replicates were analyzed [Mastersizer 2000; Malvern Pananlytica] to give the final particle size, calculated using the Mastersizer software. Values of D[4,3] and D[3,2] were included in the standard output. The particle size was calculated using Franhoffer approximations.

### Water insoluble Cellulose Fibre or Insoluble Protein Bulking Agent Particles:

Water insoluble cellulose fibre particles or insoluble protein particles, both in their hydrated forms, were measured using the same method as provided for the spray dried coated bulking agent particles; however, water was used as the dispersant. Samples of particles were added to the dispersant chamber until the required sample obscuration was achieved. An average of 3 replicates were analyzed [Mastersizer 2000; Malvern Pananlytica] to give the final particle size, calculated using the Mastersizer software. Values of D[4,3] and D[3,2] were included in the standard output. The particle size was calculated using Franhoffer approximations. Mastersizer calculations of particle sizes are based on Mie light scattering theory which assumes spherical particles.

### Method for Measurement of Casson Viscosity and Casson Yield:

Chocolate and oil rheology measurements were made on a Physica MCR501 at 40°C using a 17mm profiled cup and bob (cc17-0-25/p6 and c-cc17/T200/SS/P). The method was a step method:
Step 1 is a pre-shear to condition the material at a shear rate of 5 s⁻¹
Step 2 is shear rate ramp from 2 to 50 s⁻¹ over 3 mins
Step 3 constant shear rate at 50 s⁻¹ for 1 min
Step 4 is shear rate ramp from 50 to 2 s⁻¹ over 3 mins

Only step 4 is analysed to extract the Casson parameters. Data analysed is from 50 s⁻¹ to 5 s⁻¹. Square root of stress is plotted on the y-axis and square root of shear rate is plotted on the x-axis. The square of the slope gives the Casson viscosity and the square of the intercept gives the Casson yield.

### Method for Measurement of Glass transition and Onset sugar crystal melting:

Differential Scanning Calorimetry (DSC) (measurement of glass transition temperature (T_{g}), crystallisation temperature, crystallisation enthalpy, sugar melting temperature and sugar melting enthalpy.

Differential scanning calorimetric (DSC) measurements were performed using Perkin Elmer Diamond DSC. Samples were seal into stainless steel pans. Samples were scanned for 20°C to 200°C at 10 degrees/minute. Thermograms were analyzed using standard Perkin Elmer software for peak onset, peak temperature, peak area (ΔH) and glass transition temperature (T_{g}). Tg was quoted as the temperature at the mid-point of the specific heat capacity change.

### SEM microscopy

SEM images were obtained using the following methodology. A portion of the sample was sprinkled onto a large specimen stub on which was mounted a sticky carbon disc. The stub was gently tapped to remove any loose particle. The sample was rotary sputter coated with 20 nm of gold/palladium. Imaging was carried out in the SEM (JEOL JSM-6060) operated at either 5 or 10kV to eliminate any charging effects and the specimen stage tilted to 45°. Images were captured at appropriate magnifications to best demonstrate particle structure.

### Method for measuring Water Binding Capacity

10ml of water was added to 1g of dry particles in a centrifuge tube. The mix inverted 30 times to ensure adequate hydration and then left overnight (17.5 hours) at chill temperature. The hydrated slurry was separated by centrifugation 2200 g for 30 minutes in a Sorvall^{®} RC3C centrifuge [ThermoFisher Scientific]. The supernatant was removed and the resulting pellet blotted with tissue paper. The mass of the pellet was then recorded. The water binding was calculated from the increase in the mass of the particles. Three replicates of each sample were taken and an average was calculated.

**Table 1: Coated Bulking Agent Particle Compositions**

| | | **Example** | | | | | | | | | |
|---|---|---|---|---|---|---|---|---|---|---|---|
| | | **1a** | **1b** | **2** | **3** | **4** | **5** | **6** | **7** | **8** | **9** |
| **Bulking Agent (BA) (dry weight)** | **Coffee (g)** | | | 60 | | | | | | | |
| | **Cocoa (g)** | | | | 73 | 73 | 6.0 | 16.7 | 96 | 50 | |
| | **Tea (g)** | | | | | | | | | 50 | |
| | **Insoluble Pea Protein** | | | | | | | | | | |
| | **Sucrose (g)** | 200 | 200 | 280 | 300 | 100 | 190 | 150 | 120 | 500 | 100 |
| | **Whey powder (g) (estimate d protein (g))** | 4.0 (1.2) | 4.0 (1.2) | 2.8 (0.84) | 6.0 (1.8) | 2.0 (0.6) | 3.9 (1.17) | 3.4 (1.02) | 4.3 (1.29) | 2.0 (0.6) | |
| | **estimated protein (g)** | 1.2 | 1.2 | 0.84 | 1.8 | 0.6 | 1.17 | 1.02 | 1.29 | 0.6 | |
| | **Wt % protein based on sucrose content** | 0.6 | 0.6 | 0.3 | 0.6 | 0.6 | 0.6 | 0.68 | 1.08 | 0.12 | |
| **Surface Active Agent Source** | **Wt % protein based on total mass of particle** | 0.59 | 0.59 | 0.25 | 0.47 | 0.34 | 0.59 | 0.60 | 0.59 | 0.11 | |
| **Surface Active Agent** | **Wt % dry BA based on total mass of particle** | | | 17.5 | 19.3 | 41.7 | 3.0 | 9.8 | 44 | 9.1 | |
| | **Wt % sugar based on total mass of particle** | 98 | 98 | 82.25 | 80.26 | 57.94 | 96.41 | 89.58 | 55.84 | 90.83 | |
| **Water wt% of slurry prior to spray drying** | | 300 | 300 | 1420 | 647 | 647 | 200 | 300 | 300 | 200 | |

| | | **Example** | | | |
|---|---|---|---|---|---|
| | | **9a** | **9b** | **9c** | **9d** |
| **Bulking Agent (BA) (dry weight)** | **Coffee (g)** | | | | |
| | **Cocoa (g)** | | 63 | 63 | 63 |
| | **Tea (g)** | | | | |
| | **Insoluble Pea Protein** | 20 | | | |
| | **Sucrose (g)** | 80 | 117 | 117 | 117 |
| | **Whey powder (g) (estimated protein (g))** | 1.0 (0.3) | 1.2 (0.36) | 1.2 (0.36) | 1.2 (0.36) |
| | **estimated protein (g)** | 0.30 | 0.36 | 0.36 | 0.36 |
| | **Wt % protein based on sucrose content** | 0.38 | 0.31 | 0.31 | 0.31 |
| **Surface Active Agent Source** | **Wt % protein based on total mass of particle** | 0.30 | 0.2 | 0.2 | 0.2 |
| **Surface Active Agent** | **Wt % dry BA based on total mass of particle** | 19.8 | 34.8 | 34.8 | 34.8 |
| | **Wt % sugar based on total mass of particle** | 79.2 | 64.6 | 64.6 | 64.6 |
| **Water wt% of slurry prior to spray drying** | | **50** | 64.3 | 64.3 | 64.3 |

Table 1b: Physical Characteristics of Coated Bulking Agent Particles

| | | **Example** | | | | | | | | | |
|---|---|---|---|---|---|---|---|---|---|---|---|
| | | **1a** | **1b** | **2** | **3** | **4** | **5** | **6** | **7** | **8** | **9** |
| **Bulking agent particle size (micron)** | **D(4,3)** | | | 18. 1 | 30.5 | 30.5 | 30.5 | 30.5 | 30.5 | 17.6 | |
| | **D(3,2)** | | | 5.8 | 11.0 | 11.0 | 11.0 | 11.0 | 11.0 | 11.0 | |
| **Crystalline coated bulking agent particle size (micron) in chocolate or oil** | **D(4,3)** | 44.1 | | 29.5 | | | | | 26.1 | | 12.6 |
| | **D(3,2)** | 9.2 | | 9.2 | | | | | 8.4 | | 5.5 |
| **Coated Bulking Agent Glass transition (°C)** | | | 49.15 | | 41.5 | | | | | | |
| **Coated Bulking Agent Onset temp crystallisation (°C)** | | | 101.5 | | 82.4 | | | | | | |
| **Coated Bulking Agent Onset sugar crystal melting (°C)** | | | 183.2 | | 178. 4 | | | | | | |
| **Casson Viscosity PaS** | | | | 1.1 | | | | | | | 1.6 |
| **Casson Yield Pa** | | | | 0.4 | | | | | | | 0.6 |

| | | **Example** | | | |
|---|---|---|---|---|---|
| | | **9a** | **9b** | **9c** | **9d** |
| **Bulking agent particle size (wet) (micron)** | **D(4,3)** | 8.61 | 14.4 | 14.4 | 14.4 |
| | **D(3,2)** | 0.29 | 4.7 | 4.7 | 4.7 |
| **Crystalline coated bulking agent particle size (micron) in chocolate or oil** | **D(4,3)** | 25.3 | 17.2 | 23.5 | 18.6 |
| | **D(3,2)** | 10.3 | 6.6 | 8.21 | 8.2 |
| **Coated Bulking Agent Glass transition (°C)** | | | 44 | | |
| **Coated Bulking Agent Onset temp crystallisation (°C)** | | | 80 | | |
| **Coated Bulking Agent Onset sugar crystal melting (°C)** | | | | | |
| **Casson Viscosity PaS** | | | 1.3 | 1.4 | 2.2 |
| **Casson Yield Pa** | | | 0.0 | 0.08 | 0.0 |
| **Pick-up (g)** | | | 16.5 | 15.3 | 18.2 |

**Table 2: Particles comprising Sucrose and Protein.**

| | | | | **Surface active agent** | | | | |
|---|---|---|---|---|---|---|---|---|
| **Ex** | **Protein Powder** | **Sucrose (g)** | **Protein powder (g)** | **Protein (wt %)** | **Glass transition temperature (°C)** | **Onset temp crystallisation (°C)** | **Onset sugar crystal melting (°C)** | **ΔH sugar melting (J/g)** |
| 10 | HYGEL | 100 | 2 | ~2 | 58.2 | 117.3 | 169.4 | 110.4 |
| 11 | HYGEL | 100 | 5 | ~5 | 52.8 | 120.4 | 163.2 | 93.1 |
| 12 | HYGEL | 100 | 10 | ~9 | 52.9 | 126.7 | 158.6 | 31.7 |
| 13 | Whey powder (30% protein) | 100 | 2 | ~0.6 | 66.1 | 123.2 | 181.3 | 124.5 |
| | | | | | 66.6 | 120.1 | | |
| 14 | Whey powder (30% protein) | 100 | 5 | ~1.5 | 71.6 | 128.8 | 174.3 | 106.1 |
| | | | | | 64.6 | 123.2 | | |
| 15 | Whey powder (30% protein) | 100 | 10 | ~3.0 | 59.9 | 121.0 | 170.9 | 96.0 |
| | | | | | 63.3 | 126.7 | | |
| 16 | Whey powder (30% protein) | 100 | 20 | ~5.5 | 63.9 | 128.8 | 160.7 | 83.3 |
| 17 | Whey powder (30% protein) | 100 | 30 | ~7.6 | 50.2 | 122.3 | - | 58.1 |
| 18 | Whey powder (30 % protein) and soluble pea protein | 80 | Whey protein powder 1 g; pea protein 19 g | 20 | | | | |
| 19 | Whey powder (30 % protein) and soluble pea protein | 70 | Whey protein powder 1 g; pea protein 29 g | 30 | None (Amorphous) | None (Amorphous) | None (Amorp hous) | None (Amorp hous) |

**Table 3: Fat-Based Confection Composition Comprising Coated Bulking Agent Particles in Crystalline Form**

| | | | **Fat-Based Confection Composition Comprising** | | | |
|---|---|---|---|---|---|---|
| **Ingredient (wt%)** | **Comparative Example (Example 9)** | **Comparative Example Sugar and coffee** | **Ex 2** | **Ex 9b** | **Ex 9c** | **Ex 9d** |
| **Sucrose** | 39.1 | 27.4 | 0 | 0 | 0 | 0 |
| **Cocoa butter** | 35.6 | 35.6 | 35.6 | 37.85 | 37.85 | 37.85 |
| **Cocoa powder** | 10.4 | 10.4 | 10.4 | 10.34 | 10.34 | 10.34 |
| **Butter Oil** | 5.0 | 5.0 | 5.0 | 5.15 | 5.15 | 5.15 |
| **Spent Coffee Grounds** | 0 | 11.7 | 0.0 | 0.0 | 0.0 | 0.0 |
| **Coated bulking agent particles in crystalline form** | 0 | 0.0 | 39.1 | 35.34 | 35.34 | 35.34 |
| **Milk powder** | 9.4 | 9.4 | 9.4 | 10.32 | 10.32 | 10.32 |
| **Flavours and emulsifiers** | 0.5 | 0.5 | 0.5 | 0.96 | 0.96 | 0.96 |
| **Wt% Reduction in crystalline sugar of the Composition** | 0 | 30 | 30 | 35 | 35 | 35 |

### Ingredient List:

Sugar from British Sugar 0.315-1.25mm,
Cocoa butter from Barry Callebaut,
Cocoa powder from Cargill 10-12% fat FTNG k,
Butter oil from 99.8% Meadow foods Ltd,
Spent coffee grounds derived from Douwe Egberts Pure Gold, medium roast,
Skimmed milk powder from Arla foods.

**Table 4: Casson Viscosity and Casson Yield of Examples 2, 9 and a sucrose-coffee blend.**

| **Example** | **D(3,2) µm** | **D(4,3) µm** | **Casson Viscosity (PaS)** | **Casson Yield (Pa)** |
|---|---|---|---|---|
| **Comparative Example (Example 9)** | 5.5 | 12.6 | 1.6 | 0.6 |
| **Comparative Example Sucrose and coffee** | 6.5 | 14.5 | 3.2 | 1.0 |
| **Example 2** | 9.2 | 29.5 | 1.1 | 0.4 |

Tables 3 and 4 illustrate that substitution of 30% of the granulated sugar of a fat-based confection composition comprising crystalline coated bulking agent particles result in a comparable Casson viscosity (1.1 PaS compared to 1.6 PaS) and Casson yield (0.4 Pa compared to 0.6 Pa) of the resultant fat-based confection composition in comparison to the same fat-based composition comprising sucrose only. The comparable Casson Viscosity and Casson Yield values demonstrates that a fat-based confection composition comprising crystalline coated bulking agent particles would be suitable, for example, for use as a fat-based coating composition for frozen confections.

Tables 3 and 4 also illustrate that substitution of 30% of the granulated sugar of a fat-based confection composition comprising a coffee bulking agent results in a significantly higher Casson viscosity (3.2 PaS compared to 1.6 PaS) and Casson yield (1.0 Pa compared to 0.6 Pa) when added to a fat-based confection composition. The significantly increased Casson viscosity and Casson yield values demonstrates that a fat-based confection composition comprising spent coffee grounds as a bulking agent would not be suitable for use as a fat-based coating composition for frozen confection. It's likely that such an increase in Casson Viscosity and Casson Yield would result in difficulties with processing such as coating frozen confections. Thickness and uniformity of the coating would also be adversely affected.

**Table 5:**

| **Example** | **D(3,2) µm** | **D(4,3) µm** | **Casson Viscosity (PaS)** | **Casson Yield (Pa)** | **Pick-up (g)** |
|---|---|---|---|---|---|
| **9b** | 6.6 | 17.2 | 1.3 | 0.0 | 16.5 |
| **9c** | 6.3 | 15.7 | 1.04 | 0.08 | 15.3 |
| **9d** | N/A | N/A | 2.2 | 0.0 | 18.2 |

Tables 3, 4 and 5 illustrate that substitution of 35 wt% of the granulated sugar of a fat-based confection composition comprising crystalline coated bulking agent particles result in a reduced pick-up weight when used as a coating composition for a frozen confection. Casson Viscosity (1.3 or 1.04 PaS compared to 1.6 PaS) and Casson Yield (0.0 and 0.08 Pa compared to 0.6 Pa) of the resultant fat-based confection coating composition in comparison to the same fat-based confection coating composition comprising sucrose only. The reduced Casson Viscosity and Casson Yield values demonstrate that a fat-based confection coating composition comprising crystalline coated bulking agent particles would be suitable, for example, for use as a fat-based confection coating composition for frozen confections.

Furthermore, not only is the fat-based confection coating composition comprising crystalline coated bulking agent particles of the invention reduced in calories through the substitution of the sucrose with crystalline coating bulking agent particles, the advantageous physical properties of the coated bulking agent particles of the invention, i.e.; Examples 9b and 9c, enables a reduced pick-up weight of the coating composition on the frozen confection to be achieved. This allows a further reduction in calories by enabling the reduction of the amount of fat-based confection coating composition required to fully coat frozen confections to the same quality as a fat-based confection coating composition comprising sucrose only.

Tables 3, 4 and 5 also illustrate that the fat-based confection composition comprising crystalline coated bulking agent particles of Examples of 9b and 9c have greatly reduced Casson Viscosity and Casson Yield values in comparison to amorphous coated bulking agent particles in the same fat-based confection coating composition. The Casson Viscosity and Casson Yield values of Example 9d illustrate that such compositions greatly increase the pick-up weight when used as a fat-based confection coating composition, resulting in an increase in calories per product and a lower quality of coating as the thickness and uniformity of the coating would be adversely affected by a Casson Viscosity of 2.2 Pa.

### Examples 10-11: Preparation of Crystalline Coated Bulking Agent:

### Example 10

Sucrose (280g), whey protein (2.8g) and micronized cocoa shell (dry weight 180 g)] were slurried in water (920 ml). The slurry was heated and retained at 65°C, and spray dried on a Buchi Mini B290 mini-spray dryer. The spray dryer conditions were as follows:
- Flow rate=: Pump setting 4 (equivalent to 2.8g/ minute)
- Inlet temp=: 160°C
- Outlet temp=: 100°C
- q flow =: 45

Amorphous coated bulking agent particles were collected from the sample chamber of the spray dryer and dried by heating at 80°C for 24 hours to obtain coated bulking agent particles in crystalline form.

### Examples 11:

Example 10 was followed using the amounts of components provided in Table 6; however, the amorphous coated bulking agent particles were dried by heating at 90°C for 24 hours to obtain coated bulking agent particles in crystalline form.

**Table 6: Conditions of the Crystallisation Process:**

| | **20** | **21** |
|---|---|---|
| **Temperature** °C | 80 | 90 |
| Duration (h) of heating | 24 | 24 |
| Micronized cocoa shell [dry weight (g)] | 180 | 200 |
| Sugar [Sucrose (g)] | 268 | 200 |
| Whey powder (g) | 2.68 | 2.0 |

## Claims

1. A coated bulking agent particle comprising from 2 wt% to 70 wt% bulking agent and from 30 wt% to 98 wt% coating composition comprising sugar and surface active agent, wherein the surface active agent is selected from the group consisting of proteins, lecithins, and mixtures thereof; wherein the ratio of sugar to surface active agent in the composition is from 2000:1 to 4:1 and from 50 wt% to 100 wt% of the sugar is in crystalline form; wherein the bulking agent is coated with the coating composition, wherein the bulking agent is selected from the group consisting of deflavoured cocoa powder wherein the cocoa powder is deflavoured using ethanol extraction, washed tea powder, micronized wheat bran, micronized corn bran, and mixtures thereof, with the proviso that the coated bulking agent particle is not a frozen confection coated bulking agent particle.

2. A coated bulking agent particle according to claim 1; wherein the ratio of sugar to surface active agent is from 100:1 to 16:1.

3. A coated bulking agent particle according to claim 1 or 2; wherein the coated bulking agent particle comprises from 51.00 wt% to 95.00 wt% sugar.

4. A coated bulking agent particle according to claims 1 to 3; wherein the sugar is selected from the group consisting of sucrose, lactose, trehalose, allulose, glucose, galactose and mixtures thereof.

5. A coated bulking agent particle according to claims 1 to 4, wherein the surface active agent is selected from the group consisting of: whey protein, sodium caseinate, potassium caseinate, calcium caseinate, soluble vegetable protein, protein hydrolysates, albumin, lecithin, and mixtures thereof.

6. A coated bulking agent particle according to claims 1 to 5, wherein the bulking agent has a particle size D90 of less than 100 µm.

7. A coated bulking agent particle according to claims 1 to 6, wherein the bulking agent in hydrated form has a particle size volume mean diameter of
from 10 to 60 µm.

8. An agglomerated coated bulking agent particle comprising coated bulking agent particles according to claims 1 to 7.

9. A fat-based confection composition comprising one or more particles selected from the group consisting of: coated bulking agent particles according to claims 1 to 7, agglomerated coated bulking agent particles according to claim 8, and mixtures thereof.

10. A fat-based confection composition according to claim 9; wherein the fat-based confection composition is a coating composition.

11. A process for the preparation of coated bulking agent particles according to claims 1 to 10 comprising the steps of:
a. Mixing sugar, surface active agent, bulking agent and water, wherein the surface active agent is selected from the group consisting of proteins, lecithins, and mixtures thereof,
b. Spraying and drying the mix of step a,
c. Optionally further drying the product of step b.

12. A process according to claim 11; wherein in step c the further drying occurs under vacuum at a temperature of from 60°C to 100°C.

13. A process according to claim 12; wherein the bulking agent of step a. is in wetted form.

14. A process according to claims 11 to 13; wherein the product of step b. or c. is added to a fat-based confection composition; and/or,
wherein the product of step b. or c. or the fat-based confection composition comprising the product of step b. or c. are ground.

15. A food product comprising
- the coated bulking agent particle according to claims 1 to 7,
- the agglomerated coated bulking agent particle according to claim 8, or
- the fat-based composition according to claims 9 or 10
and one or more further food ingredients, with the proviso the food product is not a frozen confection containing chocolate or chocolate-like compositions, preferably where the food product is selected from confectionery products, dairy products, spreads, desserts, and bakery products.

## Patentansprüche

1. Beschichteter Füllstoffpartikel, umfassend von 2 Gew.-% bis 70 Gew.-% Füllstoff und von 30 Gew.-% bis 98 Gew.-% Beschichtungszusammensetzung, die Zucker und oberflächenaktives Mittel umfasst, wobei das oberflächenaktive Mittel ausgewählt ist aus der Gruppe bestehend aus Proteinen, Lecithinen und Mischungen davon; wobei das Verhältnis von Zucker zu oberflächenaktivem Mittel in der Zusammensetzung von 2000 : 1 bis 4 : 1 beträgt und 50 Gew.-% bis 100 Gew.-% des Zuckers in kristalliner Form vorliegen; wobei der Füllstoff mit der Beschichtungszusammensetzung beschichtet ist, wobei der Füllstoff ausgewählt ist aus der Gruppe bestehend aus dearomatisiertem Kakaopulver, wobei das Kakaopulver unter Verwendung von Ethanolextraktion dearomatisiert ist, gewaschenem Teepulver, mikronisierter Weizenkleie, mikronisierter Maiskleie und Mischungen davon, mit der Maßgabe, dass der beschichtete Füllstoffpartikel kein beschichteter Füllstoffpartikel für gefrorenes Konfekt ist.

2. Beschichteter Füllstoffpartikel nach Anspruch 1; wobei das Verhältnis von Zucker zu oberflächenaktivem Mittel von 100 : 1 bis 16 : 1 beträgt.

3. Beschichteter Füllstoffpartikel nach Anspruch 1 oder 2; wobei der beschichtete Füllstoffpartikel von 51,00 Gew.-% bis 95,00 Gew.-% Zucker umfasst.

4. Beschichteter Füllstoffpartikel nach den Ansprüchen 1 bis 3; wobei der Zucker ausgewählt ist aus der Gruppe bestehend aus Saccharose, Lactose, Trehalose, Allulose, Glucose, Galactose und Mischungen davon.

5. Beschichteter Füllstoffpartikel nach den Ansprüchen 1 bis 4, wobei das oberflächenaktive Mittel ausgewählt ist aus der Gruppe bestehend aus: Molkenprotein, Natriumcaseinat, Kaliumcaseinat, Calciumcaseinat, löslichem Pflanzenprotein, Proteinhydrolysaten, Albumin, Lecithin und Mischungen davon.

6. Beschichteter Füllstoffpartikel nach den Ansprüchen 1 bis 5, wobei der Füllstoff eine Partikelgröße D90 von weniger als 100 µm aufweist.

7. Beschichteter Füllstoffpartikel nach den Ansprüchen 1 bis 6, wobei der Füllstoff in hydratisierter Form einen volumengemittelten Partikelgrößendurchmesser von 10 bis 60 µm aufweist.

8. Agglomerierter beschichteter Füllstoffpartikel, umfassend beschichtete Füllstoffpartikel nach den Ansprüchen 1 bis 7.

9. Konfektzusammensetzung auf Fettbasis, umfassend einen oder mehrere Partikel, ausgewählt aus der Gruppe bestehend aus: beschichteten Füllstoffpartikeln nach den Ansprüchen 1 bis 7, agglomerierten beschichteten Füllstoffpartikeln nach Anspruch 8 und Mischungen davon.

10. Konfektzusammensetzung auf Fettbasis nach Anspruch 9; wobei die Konfektzusammensetzung auf Fettbasis eine Beschichtungszusammensetzung ist.

11. Verfahren zur Herstellung von beschichteten Füllstoffpartikeln nach den Ansprüchen 1 bis 10, umfassend die Schritte:
a. Mischen von Zucker, oberflächenaktivem Mittel, Füllstoff und Wasser, wobei das oberflächenaktive Mittel ausgewählt ist aus der Gruppe bestehend aus Proteinen, Lecithinen und Mischungen davon,
b. Sprühen und Trocknen der Mischung aus Schritt a,
c. gegebenenfalls weiteres Trocknen des Produkts aus Schritt b.

12. Verfahren nach Anspruch 11; wobei in Schritt c das weitere Trocknen unter Vakuum bei einer Temperatur von 60 °C bis 100 °C erfolgt.

13. Verfahren nach Anspruch 12; wobei der Füllstoff aus Schritt a. in benetzter Form vorliegt.

14. Verfahren nach den Ansprüchen 11 bis 13; wobei das Produkt aus Schritt b. oder c. einer Konfektzusammensetzung auf Fettbasis zugegeben wird; und/oder,
wobei das Produkt aus Schritt b. oder c. oder die Konfektzusammensetzung auf Fettbasis, die das Produkt aus Schritt b. oder c. umfasst, gemahlen wird.

15. Lebensmittelprodukt, umfassend
- den beschichteten Füllstoffpartikel nach den Ansprüchen 1 bis 7,
- den agglomerierten beschichteten Füllstoffpartikel nach Anspruch 8 oder
- die Zusammensetzung auf Fettbasis nach den Ansprüchen 9 oder 10
und einen oder mehrere weitere Lebensmittelbestandteile, mit der Maßgabe, dass das Lebensmittelprodukt kein gefrorenes Konfekt ist, das Schokolade oder schokoladenähnliche Zusammensetzungen enthält, wobei das Lebensmittelprodukt vorzugsweise aus Konfektprodukten, Milchprodukten, Aufstrichen, Desserts und Backwaren ausgewählt ist.

## Revendications

1. Particule d'agent gonflant enrobée comprenant de 2 % en poids à 70 % en poids d'agent gonflant et de 30 % en poids à 98 % en poids de composition d'enrobage comprenant du sucre et un agent tensioactif, dans laquelle l'agent tensioactif est choisi dans le groupe constitué de protéines, lécithines, et mélanges de celles-ci ; dans laquelle le rapport du sucre à l'agent tensioactif dans la composition va de 2000:1 à 4:1 et de 50 % en poids à 100 % en poids du sucre est sous forme cristalline ; dans laquelle l'agent gonflant est enrobé avec la composition d'enrobage, dans laquelle l'agent gonflant est choisi dans le groupe constitué de poudre de cacao désaromatisée dans laquelle la poudre de cacao est désaromatisée à l'aide d'une extraction à l'éthanol, poudre de thé lavée, son de blé micronisé, son de maïs micronisé, et mélanges de ceux-ci, à condition que la particule d'agent gonflant enrobée ne soit pas une particule d'agent gonflant enrobée de confiserie congelée.

2. Particule d'agent gonflant enrobée selon la revendication 1 ; dans laquelle le rapport du sucre à l'agent tensioactif va de 100:1 à 16:1.

3. Particule d'agent gonflant enrobée selon la revendication 1 ou 2 ; dans laquelle la particule d'agent gonflant enrobée comprend de 51,00 % en poids à 95,00 % en poids de sucre.

4. Particule d'agent gonflant enrobée selon les revendications 1 à 3 ; dans laquelle le sucre est choisi dans le groupe constitué de saccharose, lactose, tréhalose, allulose, glucose, galactose et mélanges de ceux-ci.

5. Particule d'agent gonflant enrobée selon les revendications 1 à 4, dans laquelle l'agent tensioactif est choisi dans le groupe constitué de : protéine de lactosérum, caséinate de sodium, caséinate de potassium, caséinate de calcium, protéine végétale soluble, hydrolysats de protéines, albumine, lécithine, et mélanges de ceux-ci.

6. Particule d'agent gonflant enrobée selon les revendications 1 à 5, dans laquelle l'agent gonflant a une taille de particules D90 inférieure à 100 µm.

7. Particule d'agent gonflant enrobée selon les revendications 1 à 6, dans laquelle l'agent gonflant sous forme hydratée a un diamètre moyen en volume de taille de particules allant de 10 à 60 µm.

8. Particule d'agent gonflant enrobée agglomérée comprenant des particules d'agent gonflant enrobées selon les revendications 1 à 7.

9. Composition de confiserie à base de matière grasse comprenant une ou plusieurs particules choisies dans le groupe constitué de : particules d'agent gonflant enrobées selon les revendications 1 à 7, particules d'agent gonflant enrobées agglomérées selon la revendication 8, et mélanges de celles-ci.

10. Composition de confiserie à base de matière grasse selon la revendication 9 ; dans laquelle la composition de confiserie à base de matière grasse est une composition d'enrobage.

11. Procédé destiné à la préparation de particules d'agent gonflant enrobées selon les revendications 1 à 10 comprenant les étapes consistant à :
a. mélanger du sucre, un agent tensioactif, un agent gonflant et de l'eau, dans lequel l'agent tensioactif est choisi dans le groupe constitué de protéines, lécithine, et mélanges de celles-ci,
b. pulvériser et sécher le mélange de l'étape a,
c. facultativement sécher encore le produit de l'étape b.

12. Procédé selon la revendication 11 ; dans lequel à l'étape c le séchage supplémentaire se produit sous vide à une température allant de 60 °C à 100 °C.

13. Procédé selon la revendication 12 ; dans lequel l'agent gonflant de l'étape a. est sous forme mouillée.

14. Procédé selon les revendications 11 à 13 ; dans lequel le produit de l'étape b. ou c. est ajouté à une composition de confiserie à base de matière grasse ; et/ou,
dans lequel le produit de l'étape b. ou c. ou la composition de confiserie à base de matière grasse comprenant le produit de l'étape b. ou c. sont moulus.

15. Produit alimentaire comprenant
- la particule d'agent gonflant enrobée selon les revendications 1 à 7,
- la particule d'agent gonflant enrobée agglomérée selon la revendication 8, ou
- la composition à base de matière grasse selon les revendications 9 ou 10
et un ou plusieurs ingrédients alimentaires supplémentaires, à condition que le produit alimentaire ne soit pas une confiserie congelée contenant des compositions de chocolat ou du type chocolat, de préférence où le produit alimentaire est choisi parmi produits de confiserie, produits laitiers, produits à tartiner, desserts et produits de boulangerie.
